# EUROPÄISCHE PATENTSCHRIFT

(11) **EP 2 886 212 B1**
(45) Veröffentlichungstag und Bekanntmachung des Hinweises auf die Patenterteilung: **14.09.2016**
(21) Anmeldenummer: 13198617.6
(22) Anmeldetag: 19.12.2013
(51) Int. Cl.: B07B 13/16, G01G 19/393

(54) **Abscheidevorrichtung für einen Produktstrom und Verfahren hierfür**
Separating device for a flow of products and method for same
Dispositif de séparation pour un flux de produits et procédé correspondant

(43) Veröffentlichungstag der Anmeldung: 24.06.2015
(73) Patentinhaber: Multipond Wägetechnik GmbH, 84479 Waldkraiburg (DE)
(72) Erfinder: Sickinger, Günther, 84539 Ampfing (DE); Peters, Andreas, 84544 Aschau am Inn (DE)
(74) Vertreter: Prüfer & Partner mbB Patentanwälte · Rechtsanwälte

(56) Entgegenhaltungen:
- DE-A1- 19 617 982
- US-A- 4 431 530
- US-A- 5 074 435

## Beschreibung

Die Erfindung betrifft eine Abscheidevorrichtung für einen Produktstrom sowie ein Verfahren zum Abscheiden zumindest eines Teils eines Produktstroms.

Die Handhabung von Produkten in der Anlagentechnik, insbesondere bei einer voranschreitenden Automatisierung, erfordert es auch, Produkte zu verarbeiten und zu transportieren, die einen gewissen Anteil an Grus haben. Der Ursprung für solchen Grus kann beispielsweise in den Produkten selbst liegen. Dies kann passieren, wenn Produkte beschädigt werden, zerbrechen, zerkrümeln oder auseinanderfallen, wie dies zum Beispiel bei Backwaren denkbar ist.

Zudem kann Grus anfallen, wenn Fremdanteile in dem Produktstrom enthalten sind. Diese Fremdanteile können gewünschte Komponenten sein, wie beispielsweise Zucker, Salz, Pfeffer, Schokoladenkügelchen oder ähnliche zur Dekoration oder Beschichtung der Produkte vorgesehene Komponenten. Es ist allerdings auch denkbar, dass es sich um unerwünschte Komponenten handelt, wie beispielsweise Staub, Sand, Eiskristalle, Flüssigkeiten und ähnliches.

Durch Vorhandensein von Grus in dem Strom transportierter Produkte kann deren Verarbeitung oder deren Transport erschwert werden. So können zum Beispiel Reibungskräfte und Haftkräfte auftreten, die die Maschinen stören, oder eine vorgesehene Verarbeitung der Produkte stören, bzw. wiederum zu deren Beschädigung oder Zerstörung führen können.

Zudem sind beschädigte Produkte oder Fremdanteile anderer Komponenten unerwünscht, da in der Regel eine sortenreine Verarbeitung gewünscht ist und die Produkte ganzstückig gehandhabt werden sollen. Auch können sich bei einem Verwiegen und beim Verpacken Probleme ergeben, wenn Grus gemeinsam mit den Produkten transportiert wird.

Daher werden Abscheidevorrichtungen für Grus verschiedenster Art verwendet, beispielsweise bei der Erzeugung und Verarbeitung von Baustoffen, Lebensmitteln, Brennstoffen, etc. Dabei werden die mit Grus versetzten Produkte zum Beispiel über Siebe geführt oder mit Luft angeblasen, um kleinstückige Anteile zu entfernen, oder Staub und ähnliches zu beseitigen.

Ein zu hoher Anteil an Flüssigkeit oder Eiskristallen könnte beispielsweise auch den garantierten Mindestanteil eines festen, tiefgefrorenen Produktes in einer Fertigpackung negativ beeinflussen. Auch könnten in den Schweißbacken einer Verpackungsmaschine eingeschlossene Produktanteile das dichte Verschließen der Packung verhindern und zu einer Maschinenstörung führen.

In manchen Industrien ist es erwünscht, den aus dem Produktstrom entfernten Grus zu verwerten in dem er anderen Produktkategorien zugeführt wird, oder in demselben Prozess wieder verwendet wird.

So sind in der Lebensmittelindustrie Vorrichtungen bekannt, welche einen losen Zuckeranteil aus einem Produktstrom von gezuckerter Süßware über Schlitze in der Transportbahn abscheiden und ihn über Rohre in Auffangbehälter leiten. Dabei dürfen die Rohre den Zugang zu den übrigen Anlageteilen jedoch möglichst nicht behindern.

Es ist ein Nachteil dieser bekannten Vorrichtungen, dass sie aufgrund der üblicherweise verwendeten Rohre geschlossene Systeme darstellen, die nicht einsehbar sind. Dies bringt den weiteren Nachteil mit sich, dass die Systeme schwer zu reinigen sind. Dies ist aus hygienischen Gründen nicht wünschenswert.

Zudem wird in den bekannten Systemen der Grus in Behälter verfüllt. Diese Behälter müssen entsprechend überwacht und bei Bedarf entleert oder ausgewechselt werden. Dies erfordert ein manuelles Eingreifen und bedingt eine Unterbrechung, in der eine zuverlässige Abführung des Zuckers nicht möglich ist, bis der entleerte oder ein neuer Behälter bereitgestellt wird.

Dabei gibt es jedoch zudem Bedenken dahingehend, ob der auf diese Weise abgeschiedene Zucker auch tatsächlich wieder verwendet werden kann oder sollte.

Des Weiteren offenbart das Dokument US 5 074 435 A ein System zum Steuern eines Vibrationsförderers, wobei das System eine Sensorvorrichtung aufweist, die die Menge des geförderten Materials erfasst.

Es ist eine Aufgabe der vorliegenden Erfindung, eine verbesserte Abscheidevorrichtung bereit zu stellen, die wenigstens einen der oben genannten Nachteile ausräumt.

Die Aufgabe wird gelöst mit einer Abscheidevorrichtung gemäß Anspruch 1, einer Waage gemäß Anspruch 13, sowie einem Abscheideverfahren gemäß Anspruch 14. Vorteilhafte Weiterbildungen sind Gegenstand der Unteransprüche.

Gemäß einem ersten Aspekt der vorliegenden Erfindung wird eine Abscheidevorrichtung bereitgestellt, die ein Trennmittel, zum Abtrennen eines Teils eines Produktstroms aufweist. Diese Abscheidevorrichtung hat zudem wenigstens eine Abscheiderinne zum Transport des abgetrennten Produktstroms, sowie eine Sammelvorrichtung. Dabei ist die Abscheiderinne so angeordnet, dass der abgetrennte Produktstrom in die Sammelvorrichtung überführbar ist. Das heißt, die Abscheiderinne leitet den abgetrennten Produktstrom in die Sammelvorrichtung. Die Sammelvorrichtung ist dabei derart ausgebildet, dass sie den abgetrennten Produktstrom, also den der Sammelvorrichtung zugeführten Produktstrom, weiter transportieren kann. Der nicht-abgetrennte Produktstrom wird dabei unabhängig von der Abscheidevorrichtung weiter transportiert. Der abgeschiedene Produktstrom ist in einigen Ausführungsformen insbesondere Grus.

In einigen Ausführungen ist die Abscheidevorrichtung einer Wägeeinheit, beispielsweise einer Wägezelle in einer Kombinationswaage, vorgeschaltet. So kann verhindert werden, dass der abgetrennte Produktstrom, insbesondere also Grus, in die Wägezelle gerät und mitgewogen wird. Dies kann die Zuverlässigkeit der Vorrichtung erhöhen.

Die Sammelvorrichtung ist dazu zumindest in dem Bereich, in dem eine Zuführung des abgetrennten Produktstroms von der Abscheiderinne erfolgt, zu der Abscheiderinne hin geöffnet. In bestimmten Ausführungsformen kann insbesondere auch die gesamte Sammelvorrichtung geöffnet sein. Dazu kann die Sammelvorrichtung zum Beispiel in Form eines U-Profils ausgebildet sein, so dass an jeder Position der Sammelvorrichtung eine Zuführung des abgetrennten Produktstroms möglich ist.

Der abgetrennte Produktstrom kann dabei beispielsweise von deren Abtrennvorrichtung weg, auf der Abscheiderinne rutschen. Es ist jedoch auch denkbar, beispielsweise bei dem Transport größerer oder ganzer Produktteile, dass die Abscheiderinne ein eigenes Transportmittel zum Transportieren des abgetrennten Produktstroms aufweist.

So kann eine kontinuierliche Zuführung des abgetrennten Produktstroms, beispielsweise Zucker, ermöglicht werden. Durch den Weitertransport kann somit auch eine Verwertung des abgetrennten Produktstroms ermöglicht werden. Dies kann Produktionskosten verringern. Dies kann zudem eine Produktivität der Anlage erhöhen.

Die Sammelvorrichtung ist als ein rotierbarer Sammelring ausgebildet. Ein derartiger Sammelring kann um eine vertikale Achse rotierbar ausgebildet sein. So kann dieselbe Sammelvorrichtung von mehreren Abscheidevorrichtungen mit Grus beliefert werden, wobei dieser von jeder der Abscheidevorrichtungen weiter transportiert werden kann. Zudem kann so ein einfacher Abtransport des Grus erreicht werden. Dies kann wiederum, durch Erhöhung des wiederverwendeten Anteils, Produktionskosten einsparen.
In einigen Ausführungen ist es auch möglich, dass die Sammelvorrichtung über ein separates Transportmittel verfügt. So kann die Sammelvorrichtung beispielsweise ein bewegbares Transportband oder ähnliches aufweisen, womit der abgetrennte Produktstrom in der Sammelvorrichtung transportiert wird.
In bestimmten Weiterbildungen der Erfindung kann die Abscheiderinne und/oder die Sammelvorrichtung eine vorbestimmte Bodengeometrie aufweisen. Diese Bodengeometrie kann beispielsweise eine Oberflächenrauhigkeit sein. Die Bodengeometrie kann auch bestimmte Formen aufweisen, wie Längsstreben oder Querstreben. Weiterhin ist es denkbar, dass die Bodengeometrie Noppen, Stopper oder ähnliche dem Fachmann bekannte Komponenten aufweist. Weiterhin ist es vorstellbar, dass die Bodengeometrie durch bestimmte Materialeigenschaften, beispielsweise geringe Haftkräfte oder hohe Haftkräfte, geprägt ist. Es versteht sich, dass die Bodengeometrien der Abscheiderinne und der Sammelvorrichtung sich voneinander unterscheiden können.

Auf diese Weise kann die Erfindung an verschiedenste Anwendungen angepasst und für verschiedenste Arten von Grus verwendet werden.

In wiederum bestimmten Weiterbildungen der Erfindung weist die Abscheidevorrichtung wenigstens einen Antrieb zum Antreiben der Sammelvorrichtung, insbesondere des Transportmittels der Sammelvorrichtung auf. So kann ein Abtransport des abgetrennten Produktstroms automatisiert werden. Dies kann eine verbesserte Produktivität der Vorrichtung ermöglichen. Zudem kann dies einen kontinuierlichen Abtransport des Grus ermöglichen. Es ist dabei jedoch auch denkbar, dass der Abtransport an die jeweilige abzutransportierende Menge Grus angepasst werden kann. Der Abtransport kann dabei insbesondere automatisiert werden.

Vorzugsweise kann der Antrieb ein Elektromotor sein. In bestimmten Weiterbildungen kann dieser Antrieb auch ein gekapselter Antriebsmotor sein. In bestimmten Weiterbildungen kann der Antrieb vorzugsweise ein staubdicht gekapselter Antriebsmotor sein. So kann ein Risiko verringert werden, dass Fremdanteile von Seiten des Antriebs in den Produktstrom oder in den abgetrennten Produktstrom geraten. Dies kann eine Zuverlässigkeit der Vorrichtung erhöhen.

In einigen Ausführungen kann der Motor ein BLDC Motor sein. Eine kompakte Bauweise kann dabei insbesondere den Einbau in Rohre ermöglichen. Derartige Motoren können zum Antreiben der Sammelvorrichtung eine Antriebsrolle aufweisen.

In bestimmten Ausführungen kann die Sammelvorrichtung zudem ein Führungsmittel aufweisen. Das Führungsmittel kann eine Führung der Sammelvorrichtung zum Transportieren des abgetrennten Produktstroms erlauben. So kann die Sammelvorrichtung den abgetrennten Produktstrom zuverlässig weiter transportieren. Dies kann eine verbesserte Automatisierung erlauben. Es ist dabei insbesondere auch denkbar, dass das Führungsmittel lediglich das Transportmittel der Sammelvorrichtung führt.

In bestimmten Weiterbildungen der Erfindung kann das Führungsmittel Rollen aufweisen. Die Rollen können dabei so vorgesehen sein, dass die Sammelvorrichtung bzw. das Transportmittel der Sammelvorrichtung axial und/oder radial geführt werden kann. Dies kann durch eine entsprechende Halterung, beispielsweise mit Kreuzgelenken ermöglicht werden, wie später noch zu beschreiben ist. Durch derartige Gelenke kann die Anzahl an Freiheitsgraden bei der Lagerung der Sammelvorrichtung erhöht werden. Auf diese Weise kann das Einsatzgebiet der Abscheidevorrichtung bzw. der Sammelvorrichtung erhöht werden. So kann auch eine bessere Verteilung des abgetrennten Produkts erreicht werden.

In weiteren Weiterbildungen der Erfindung kann das Führungsmittel wenigstens eine antreibbare Rolle aufweisen. So kann eine Führung und ein Antrieb der Sammelvorrichtung bzw. des Transportmittels der Sammelvorrichtung kombiniert werden. Dies erlaubt eine Reduzierung der Komplexität der Vorrichtung. Dies kann somit die Kosten für die Vorrichtung verringern.

Zudem kann in bestimmten Weiterbildungen eine Halterung vorgesehen sein, die wenigstens ein Kreuzgelenk zum Befestigen der Abscheidevorrichtung aufweist. Durch Vorsehen einer Halterung kann eine Befestigung der erfindungsgemäßen Vorrichtung an einer Vielzahl verschiedener Industrieanlagen ermöglicht werden. Durch Vorsehen eines Kreuzgelenks kann die Befestigung zudem erleichtert werden. Auch ist eine individuelle Befestigung der Vorrichtung abhängig von der Industrieanlage, dem Bauraum und weiteren Faktoren möglich.

In bestimmten weiteren Ausbildungen kann die Abscheidevorrichtung ein Erfassungsmittel zum Erfassen von Parametern des abgetrennten Produktstroms aufweisen. So kann beispielsweise ein Detektor vorgesehen sein, der eine Anzahl an abgetrennten Produktteilen erfasst. Es ist auch denkbar, dass ein Detektor vorgesehen ist, der die Größe der Elemente des abgetrennten Produktstroms erfasst. Zudem ist es denkbar, dass ein Detektor das Volumen und/oder das Gewicht und ähnliche Parameter des abgetrennten Produktstroms erfasst. Auf diese Weise kann eine Steuerung der Sammelvorrichtung abhängig von dem jeweils vorliegenden Produktstrom vorgesehen werden.

Entsprechend kann die erfindungsgemäße Vorrichtung in bestimmten Weiterbildungen des Weiteren eine Steuereinheit aufweisen, zum Steuern und/oder Regeln einer Bewegung, insbesondere einer Drehbewegung, der Sammelvorrichtung, in Abhängigkeit von vorbestimmten Parametern und/oder von Parametern, die mit dem Erfassungsmittel erfasst wurden. Die Steuerung kann natürlich auch lediglich das Transportmittel der Steuervorrichtung steuern. Insbesondere kann es sich bei der Bewegung um die Transportbewegung der Sammelvorrichtung handeln.

Weiterhin ist denkbar, dass auch die Abscheiderinne ein Transportmittel aufweist, welches von der Steuereinrichtung gesteuert wird. So kann insbesondere eine Transportgeschwindigkeit des abgetrennten Produktstroms an die Menge des abgetrennten Produktstroms angepasst werden. Beispielsweise kann bei einem hohen abzutrennenden Anteil eine höhere Geschwindigkeit des Transports in der Abscheiderinne und/oder der Sammelvorrichtung gewünscht sein. Bei entsprechend kleinen Mengen kann eine entsprechend kleine Geschwindigkeit gewünscht sein. So kann durch eine entsprechende Steuerung eine verbesserte Automatisierung ermöglicht werden. Zudem kann so Energie zum Transport des abgetrennten Produktstroms eingespart werden.

In bestimmten Weiterbildungen kann die Abscheidevorrichtung des Weiteren eine Absaugöffnung aufweisen. Die Absaugöffnung kann dabei derart ausgebildet sein, dass zumindest ein Teil des in der Sammelvorrichtung gesammelten abgetrennten Produktstroms aus der Sammelvorrichtung abgesaugt werden kann.

Dazu kann die Absaugvorrichtung beispielsweise auch eine Absaugdüse aufweisen. Diese Absaugdüse oder die Absaugöffnung können beispielsweise einen vorbestimmten Durchmesser aufweisen. So können nur Teile mit einer vorbestimmten Größe abgesaugt werden. Auch können die Absaugdüse bzw. die Absaugöffnung Mittel vorsehen, beispielsweise Netze oder Gitter oder ähnliches. So kann wiederum eine Größe von Partikeln begrenzt werden, die von der Absaugvorrichtung abgesaugt werden sollen.

Zudem kann die Absaugleistung der Absaugvorrichtung regulierbar sein. Dazu kann die Absaugvorrichtung beispielsweise von einer Steuereinrichtung, beispielsweise der oben erwähnten Steuereinrichtung, gesteuert werden. So kann ein Gewicht, insbesondere ein maximales Gewicht, der Partikel, die von der Absaugvorrichtung aus der Sammelvorrichtung abgesaugt werden soll, vorbestimmt bzw. verändert werden.

In weiteren Weiterbildungen kann die Abscheidevorrichtung zudem eine Mehrzahl an Sammelvorrichtungen aufweisen, die in einer Transportrichtung des abgetrennten Produktstroms hintereinander, vorzugsweise untereinander, angeordnet sind. Dabei kann wenigstens eine der Sammelvorrichtungen ein Selektiermittel zum Selektieren eines Teils des abgetrennten Produktstroms aufweisen. Dieses Selektiermittel kann beispielsweise ein Gitter, ein Sieb, ein Netz oder ähnliches sein. Das Selektiermittel kann dabei so vorgesehen sein, dass, ähnlich einem Sieb, ein Teil des abgetrennten Produktstroms, in dem Fall eines Siebs diejenigen Produktteile, die durch das Sieb hindurch passen, zu einer weiteren Sammelvorrichtung übertreten können. Dieser übertretende Teil kann der selektierte Teil oder der gerade nicht-selektierte Teil sein.

Es sind natürlich auch andere Selektiermittel denkbar, die eine Selektion aufgrund verschiedener Eigenschaften erlauben. So können Produkteile verschiedene physikalische Eigenschaften wie Gewicht, Dichte, Schmelzpunkt, Gefrierpunkt oder magnetische Eigenschaften aufweisen, die sie von anderen Produktteilen unterscheiden. Entsprechende Selektiermittel können insofern Waagen, Flüssigkeiten vorbestimmter Dichten oder anderer Eigenschaften, Heizvorrichtungen, Kältevorrichtungen, Magnete oder ähnliches aufweisen.

Es versteht sich zudem, dass alle der genannten Ausführungen und Weiterbildungen miteinander kombinierbar sind. Vorliegend wird lediglich aus Übersichtlichkeitsgründen darauf verzichtet, jede der möglichen Kombinationen separat aufzuzeigen.

Gemäß einem zweiten Aspekt der Erfindung wird eine Waage bereitgestellt, insbesondere eine Kombinationswaage, die eine Abscheidevorrichtung gemäß einer der Ausführungen des ersten Aspekts aufweist. So kann beim Einwiegen der Produkte unerwünschtes Grus zuverlässig beseitigt werden. Dies kann eine Zuverlässigkeit und Präzision einer Abfüllanlage erhöhen.

Gemäß einem dritten Aspekt der Erfindung wird ein Verfahren bereitgestellt zum Abscheiden eines Teils eines Produktstroms. Das Verfahren beinhaltet die Schritte des Abtrennens eines Produktstroms mit einem Trennmittel; des Transportierens des abgetrennten Produktstroms mittels einer Abscheiderinne; des Überführens des abgetrennten Produktstroms von der Abscheiderinne in eine Sammelvorrichtung; und des Transportierens des von der Abscheiderinne in die Sammelvorrichtung zugeführten Produktstroms.

Weitere Vorteile, Weiterbildungen sowie bevorzugte Ausführungsformen der Erfindung werden im Folgenden unter Bezugnahme auf die Figuren detaillierter beschrieben.

Dabei zeigt:
Fig. 1 eine Abscheidevorrichtung gemäß einer Ausführungsform;
Fig. 2 eine vergrößerte Ansicht eines Ausschnitts aus Fig. 1;
Fig. 3 ein Führungs- und Antriebsmittel einer Abscheidevorrichtung gemäß einer Ausführungsform
Fig. 4 eine Befestigungsvorrichtung einer Abscheidevorrichtung gemäß einer Ausführungsform

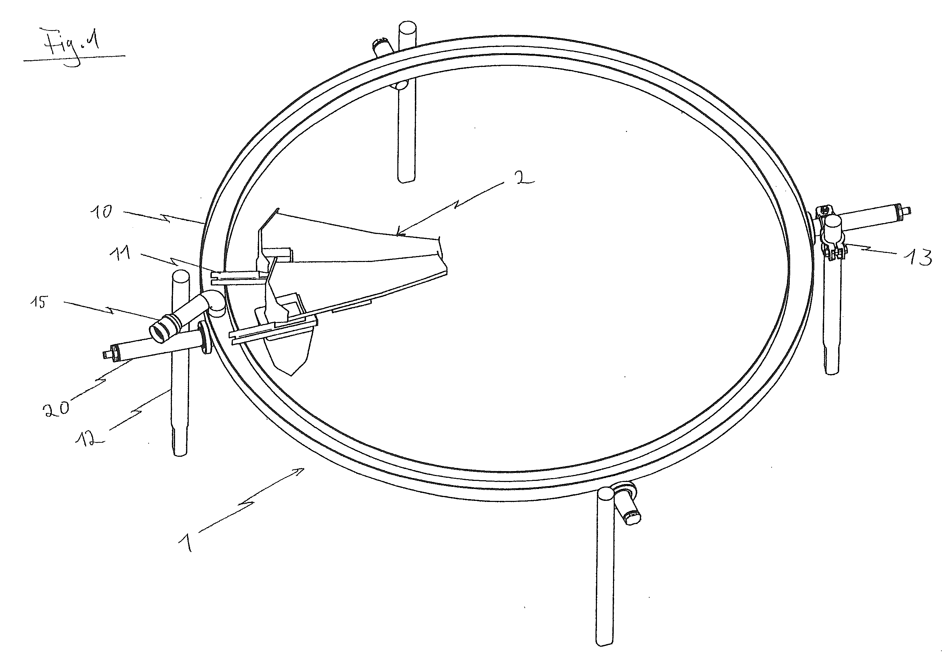

Fig. 1 zeigt eine Abscheidevorrichtung 1 gemäß einer Ausführungsform der vorliegenden Erfindung. Die Abscheidevorrichtung 1 weist eine ringförmige Sammelvorrichtung 10 auf. Die Sammelvorrichtung 10 ist um eine Trennvorrichtung 2 herum angeordnet. Die Trennvorrichtung 2 dient zum Abtrennen eines Teils eines ihr zugeführten Produktstroms und zum weitern Verarbeiten des nichtabgetrennten Teils des Produktstroms. Eine Abtrennung des Produktstroms erfolgt auf die übliche Weise und wird hier nicht im Detail beschrieben.

Die Abscheidevorrichtung 1 weist des Weiteren eine Mehrzahl Abscheiderinnen 11 auf. Die Abscheiderinnen 11 erstrecken sich jeweils in einer im Wesentlichen radialen Richtung aus Richtung eines Zentrums der Sammelvorrichtung 10 von der Trennvorrichtung 2 zu der Sammelvorrichtung 10. Die Abscheiderinnen 11 sind vorliegend U-förmig ausgebildet. Eine geöffnete Seite der Abscheiderinnen 11 ist dabei zu einer Öffnung der Trennvorrichtung 2 hin geöffnet. So kann der abgetrennte Produktstrom von der Trennvorrichtung 2 in die Abscheidevorrichtung 11 gelangen.

Des Weiteren hat die Abscheiderinne 11 ein offenes stirnseitiges Ende. Dieses offene Ende der Abscheiderinne 11 ragt über eine Öffnung der Sammelvorrichtung 10. So kann der in der Abscheiderinne 11 befindliche Produktstrom von der Abscheiderinne 11 in die Sammelvorrichtung 10 überführt werden.

In bestimmten Ausführungsformen der Erfindung ist die Abscheiderinne 11 abwärts geneigt von der Trennvorrichtung 2 hin zu der Sammelvorrichtung 10 angeordnet. In anderen Ausführungsformen kann auch ein Vibrationsmittel vorgesehen sein, dass zumindest die Abscheiderinne, möglicherweise aber auch die Sammelvorrichtung und/oder die Trennvorrichtung in Vibration versetzt. Auf diese Weise kann ein Transport des abgetrennten Produktstroms verbessert werden.

Es versteht sich, dass in Fig. 1 nur ein Teil der denkbaren Trennvorrichtungen dargestellt sind. Insbesondere ist es denkbar, dass eine Mehrzahl an Trennvorrichtungen 2 in einer Umfangsrichtung der Sammelvorrichtung ausgebildet sind. Dabei weist vorzugsweise jede der Trennvorrichtungen 2 eine Abscheiderinne 11 auf.

Die in Fig. 1 dargestellte Abscheidevorrichtung 1 weist zudem eine Mehrzahl an Standfüßen 12 auf. Die Standfüße 12 sind zylinderförmig ausgebildet. Die Standfüße 12 sind in einer Umfangsrichtung der Sammelvorrichtung 10 in regelmäßigen Abständen angeordnet.

An einem oberen Endabschnitt der Standfüße 12, also an einer dem Boden abgewandten Seite der Standfüße 12, ist ein Befestigungsmittel 13 vorgesehen, wie später noch im Detail beschrieben ist.

An dem Befestigungsmittel 13 ist ein Antrieb 20 befestigt. Der Antrieb 20 ist dabei ein zylinderförmiger Motor der ebenfalls später noch im Detail beschrieben wird.

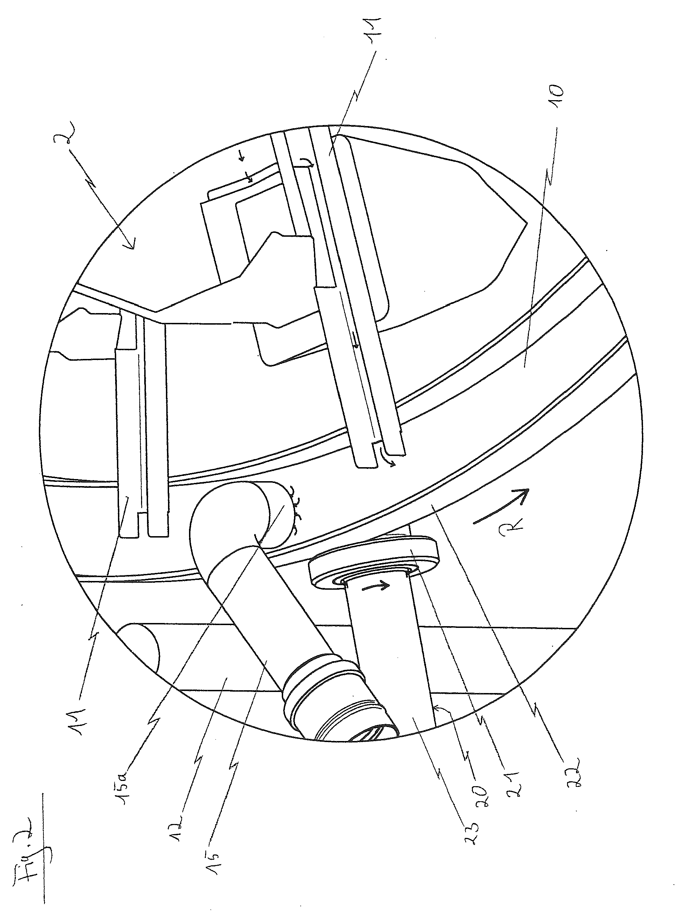

Des Weiteren weist die Abscheidevorrichtung 1 eine Absaugvorrichtung 15 auf. Wie in Fig. 2 zu erkennen ist, ist die Absaugvorrichtung 15 als ein Rohr ausgebildet, dass sich in einer horizontalen Richtung über die Sammelvorrichtung 10 erstreckt. In einem Rohrabschnitt, der über die Sammelvorrichtung 10 ragt, weist das Rohr eine Krümmung auf, die das Rohrende der Absaugvorrichtung 15 zu der Sammelvorrichtung ausrichtet. Die Absaugvorrichtung weist zudem eine Absaugdüse 15a auf, die an einem Endabschnitt der Absaugvorrichtung 15 angeordnet ist.

Wie zudem aus Fig. 2 zu erkennen ist, weist der Antrieb 20 ein Führungsmittel 21 auf. Das Führungsmittel 21 ist an einer Seite des Antriebs 20 vorgesehen, die der Sammelvorrichtung 10 zugewandt ist. Das Führungsmittel 21 ist zylindrisch um den Antrieb 20 angeordnet und erstreckt sich von dem Antrieb 14 in einer radial außwärts gerichteten Richtung.

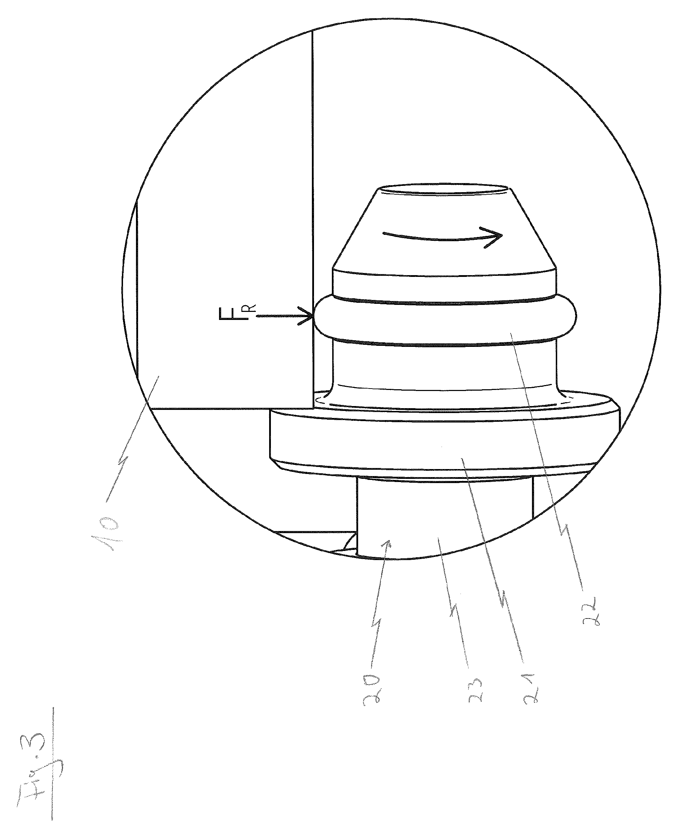

Wie sich aus Fig. 3 ergibt, weist der Antrieb eine rotierbare Welle 23 auf. Die Führungsvorrichtung 21 und ein Antriebsmittel 22 sind auf der Welle 23 angeordnet. Das Antriebsmittel 22 ist zwischen dem Führungsmittel 21 und einem Ende der Welle 23 angeordnet. Dabei ist das Antriebsmittel 22 ringförmig um die Welle 23 ausgebildet. Insbesondere kann das Antriebsmittel als ein O-Ring, beispielsweise aus Gummi, ausgebildet sein.

Das Antriebsmittel 22 erstreckt sich dabei in der radialen Richtung relativ zu der Welle 23 parallel zu, aber nicht so weit wie das Führungsmittel 21. Das Führungsmittel 21 überragt das Antriebsmittel also in der radialen Richtung relativ zu der Welle, in der vorliegenden Ausführung also in einer vertikalen Richtung.

Eine Rotation der Welle 23 führt somit auch zu einer Rotation des Führungsmittels 21 und des Antriebsmittels 22, wie durch den gekrümmten Pfeil in Fig. 3 angedeutet ist.

Die Standfüße 12 und der Antrieb 20 sind dabei derart angeordnet, dass die Sammelvorrichtung 10 auf dem Endabschnitt der Welle 23 aufliegt, das mit dem Antriebsmittel 22 versehen ist. Zudem ist der Antrieb 20 derart angeordnet, dass die Sammelvorrichtung 10 in einer radialen Richtung, also an einer äußeren Umfangsseite, von dem Führungsmittel 21 eingefasst ist. Vorzugsweise erfolgt die Ausrichtung derart, dass die Sammelvorrichtung 10 und das Führungsmittel 21 kontaktfrei sind, um eine Reibung dazwischen zu vermeiden.

Weiterhin liegt die Sammelvorrichtung 10 zumindest teilweise auf dem Antriebsmittel 22 auf. Eine Drehung der Welle 23 in der Rotationsrichtung bewirkt also eine Reibungskraft F_{R} zwischen der Sammelvorrichtung 10 und dem Antriebsmittel 22, wie in Fig. 3 zu erkennen ist. Dies führt dazu, dass die Drehung der Welle 23 in einer Rotationsrichtung eine Bewegung R der Sammelvorrichtung 10 bewirkt, wie in Fig. 2 durch den gekrümmten Pfeil dargestellt ist.

Auf diese Weise wird die Sammelvorrichtung 10 gedreht und das in der Sammelvorrichtung 10 enthaltene Gut kann an der Absaugvorrichtung 15 vorbei transportiert werden.

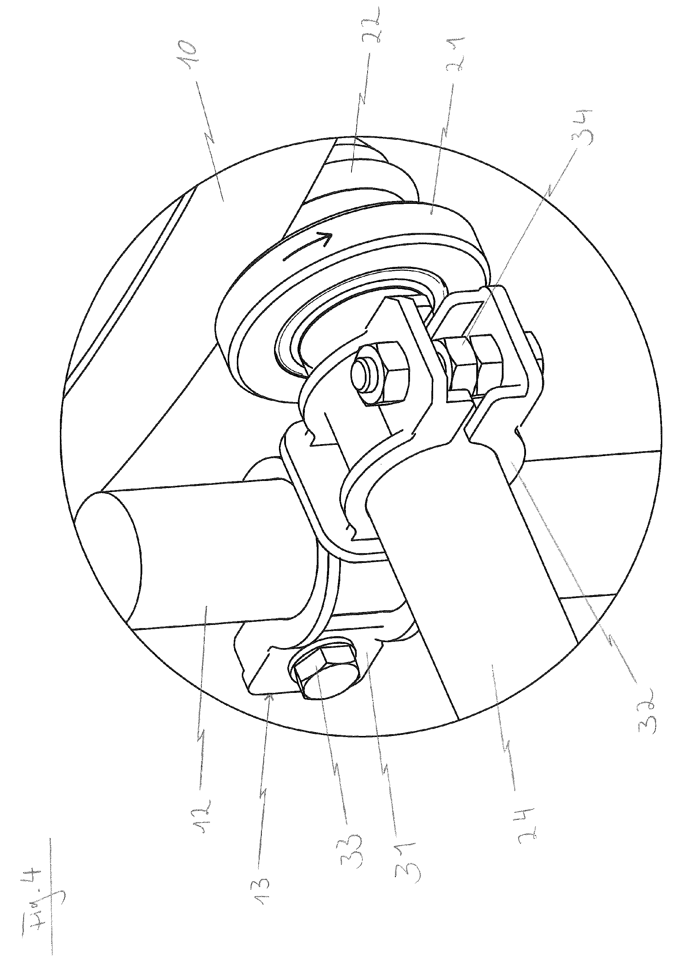

Fig. 4 zeigt eine Befestigung eines Antriebs 20 an einem Standfuß 12. Die Befestigung des Antriebs 20 relativ zu dem Standfuß 12 erfolgt vorliegend durch das Befestigungsmittel 13. Das Befestigungsmittel 13 ist als ein Kreuzgelenk ausgebildet. Das Befestigungsmittel 13 weist dazu eine erste Befestigungsmanschette 31 auf. Die erste Befestigungsmanschette 31 ist um einen Standfuß 12 angeordnet. Mittels eines ersten Verschlussmittels, hier einer Mutter-Schraubenkombination 33, wird die erste Befestigungsmanschette 31 an dem Standfuß 12 befestigt. Zusätzlich zu der ersten Befestigungsmanschette 31 ist eine zweite Befestigungsmanschette 32 vorgesehen, die drehbar zu der ersten Befestigungsmanschette 31 angeordnet ist. So kann ein beliebiger Winkel, vorliegend 90°, zwischen der ersten Befestigungsmanschette 31 und der zweiten Befestigungsmanschette 32 eingestellt werden.

Analog zu der dem ersten Verschlussmittel weist auch die zweite Befestigungsmanschette 32 eine Mutter-Schraubenkombination 34 zur Befestigung auf. Die zweite Befestigungsmanschette 32 ist damit an einer die Welle 23 umgebenden Hülle 24 befestigt. So kann sich die Welle 23 drehen, während eine sichere Halterung des Antriebs 20 und somit auch der Sammelvorrichtung 10 ermöglicht ist.

Während in der gezeigten Ausführungsform in Fig. 1 an jedem Standfuß 12 ein Antrieb 20 angeordnet ist, kann in verschiedenen Ausführungsformen auch lediglich einer der Standfüße oder ein Teil der Standfüße einen Antrieb aufweisen. Die nicht mit einem Antrieb versehenen Standfüße können in diesem Fall Mittel zum Tragen der Sammelvorrichtung aufweisen. Diese Mittel können insbesondere Kugellager oder ähnliches sein.

Im Folgenden soll nochmals kurz die Funktion der vorliegenden Vorrichtung am Beispiel einer Kombinationswaage wiedergegeben werden, um das vorliegende Verfahren zu beschreiben. Es versteht sich, dass eine analoge Anwendung auch bei anderen Industrieanlagen erfolgen kann.

Eine spezielle Ausführungsform der vorliegenden Erfindung soll bei einer Kombinationswaage, welche gezuckerte Produkte verwiegt, den losen Zuckeranteil von Linearrinnen zum Zuführen der Produkte zu einer Waage ableiten. Dadurch soll verhindert werden, dass dieser lose Zucker in die Behälter und anschließend in die Verpackung gelangen kann. Dafür werden am Ende der Linearrinnen die Abscheiderinnen 11 angebracht. Diese leiten den Zucker, welcher durch eine oder mehrere schlitzförmige Öffnungen im Rinnenboden der Linearrinnen herausfällt, über offene Rinnen beispielsweise über ein entsprechendes Gefälle zu der Sammelvorrichtung 10, hier einem Sammelring. Die Abscheiderinnen 11 sind an den Linearrinnen befestigt und können, vorzugsweise zusammen mit diesen, in Vibration versetzt werden, so dass der Zucker in Richtung Ring wandern kann.

Der Ring besteht aus einem offenen, ringförmigen Kanal welcher auf mehreren Lager- und Führungsrollen aufliegt. Der Ring kann über einen oder mehrere Antriebe in eine beliebige Drehrichtung in Bewegung gesetzt werden. Als Antriebe sind in Rohre eingebaute Motoren vorgesehen, die vorzugsweise staubdicht gekapselt sind. Auf den über einen Wellendichtring herausgeführten Motorwellen sitzen Antriebsrollen mit Führungsfunktion, auf denen ein O-Ring befestigt ist. Der Ring liegt mit seinem Eigengewicht auf diesem O-Ring auf. Beim Drehen der Motorwelle wird, über die Reibungskraft zwischen O-Ring und Ringboden, der Ring in eine Richtung angetrieben.

Die Führungsrollen und Antriebe lassen sich über Kreuzgelenke universell und stufenlos an allen Maschinentypen befestigen. Diese wiederum werden an den Haltearmen des Rahmens angebracht. Der Anbau der Abscheidevorrichtung an den vorhandenen mechanischen Aufbau einer Kombinationswaage benötigt somit keine grundlegende Änderung derselben. Der Zugang zu allen Komponenten ist weiterhin möglich.

Zusammengefasst wird eine Abscheidevorrichtung 1 beschrieben. Die Abscheidevorrichtung hat ein Trennmittel 2, zum Abtrennen eines Teils eines Produktstroms sowie wenigstens eine Abscheiderinne 11 zum Transport des abgetrennten Produktstroms. Weiterhin ist eine Sammelvorrichtung 10 vorgesehen, wobei die Abscheiderinne 11 derart angeordnet ist, dass der abgetrennte Produktstrom in die Sammelvorrichtung 10 überführbar ist. Die Sammelvorrichtung 10 ist dabei so ausgebildet, dass der von der Abscheiderinne 11 in die Sammelvorrichtung 10 zugeführte Produktstrom transportiert werden kann.

## Patentansprüche

1. Abscheidevorrichtung (1) mit
einem Trennmittel (2), zum Abtrennen eines Teils eines Prodüktstroms,
wenigstens einer Abscheiderinne (11) zum Transport des abgetrennten Produktstroms, und
einer Sammelvorrichtung (10),
wobei die Abscheiderinne (11) derart angeordnet ist, dass der abgetrennte Produktstrom in die Sammelvorrichtung (10) überführbar ist,
wobei die Sammelvorrichtung (10) ausgebildet ist, den von der Abscheiderinne (11) in die Sammelvorrichtung (10) zugeführten Produktstrom zu transportieren,
**dadurch gekennzeichnet, dass**
die Sammelvorrichtung (10) ein rotierbarer Sammelring ist.

2. Abscheidevorrichtung (1) gemäß Anspruch 1, **dadurch gekennzeichnet, dass** die Abscheiderinne (11) und/oder die Sammelvorrichtung (10) eine vorbestimmte Bodengeometrie aufweist.

3. Abscheidevorrichtung (1) gemäß einem der vorhergehenden Ansprüche, **dadurch gekennzeichnet, dass** die Abscheidevorrichtung (1) wenigstens einen Antrieb (20) zum Antreiben der Sammelvorrichtung (10) aufweist.

4. Abscheidevorrichtung (1) gemäß Anspruch 3, **dadurch gekennzeichnet, dass** der Antrieb (20) ein gekapselter, vorzugsweise ein staubdicht gekapselter, Antriebsmotor ist.

5. Abscheidevorrichtung (1) gemäß einem der vorhergehenden Ansprüche, **dadurch gekennzeichnet, dass** die Abscheidevorrichtung (1) wenigstens ein Führungsmittel (21) aufweist.

6. Abscheidevorrichtung (1) gemäß Anspruch 5, **dadurch gekennzeichnet, dass** das Führungsmittel (21) Rollen aufweist zum axialen und/oder radialen Führen der Sammelvorrichtung (10).

7. Abscheidevorrichtung (1) gemäß einem der Ansprüche 5 oder 6, **dadurch gekennzeichnet, dass** das Führungsmittel (21) wenigstens eine antreibbare Rolle aufweist.

8. Abscheidevorrichtung (1) gemäß einem der vorhergehenden Ansprüche, **dadurch gekennzeichnet, dass** eine Halterung (13) vorgesehen ist, die wenigstens ein Kreuzgelenk (31, 32) zum Befestigen der Abscheidevorrichtung (1) aufweist.

9. Abscheidevorrichtung (1) gemäß einem der vorhergehenden Ansprüche, **dadurch gekennzeichnet, dass** die Abscheidevorrichtung (1) ein Erfassungsmittel zum Erfassen von Parametern des abgetrennten Produktstroms aufweist.

10. Abscheidevorrichtung (1) gemäß einem der vorhergehenden Ansprüche, **dadurch gekennzeichnet, dass** die Abscheidevorrichtung (1) des Weiteren eine Steuereinheit aufweist, zum Steuern und/oder Regeln einer Bewegung, insbesondere einer Drehbewegung, der Sammelvorrichtung (10), in Abhängigkeit von vorbestimmten Parametern und/oder von Parametern, die mit dem Erfassungsmittel erfasst wurden.

11. Abscheidevorrichtung (1) gemäß einem der vorhergehenden Ansprüche, **dadurch gekennzeichnet, dass** die Abscheidevorrichtung (1) des Weiteren eine Absaugvorrichtung (15) aufweist, wobei die Absaugvorrichtung (15) eine Absaugöffnung aufweist, die derart ausgebildet ist, dass zumindest ein Teil des in der Sammelvorrichtung gesammelten abgetrennten Produktstroms aus der Sammelvorrichtung abgesaugt werden kann.

12. Abscheidevorrichtung (1) gemäß einem der vorhergehenden Ansprüche, wobei die Abscheidevorrichtung (1) eine Mehrzahl an Sammelvorrichtungen (10) aufweist, die in einer Transportrichtung des abgetrennten Produktstroms hintereinander, vorzugsweise untereinander, angeordnet sind, und wobei wenigstens eine der Sammelvorrichtungen ein Selektiermittel zum Selektieren eines Teils des abgetrennten Produktstroms aufweist, das so ausgebildet ist, das der selektierte Teil oder der nicht-selektierte Teil in eine weitere Sammelvorrichtung überführbar ist.

13. Waage, insbesondere Kombinationswaage, mit einer Abscheidevorrichtung (1) gemäß einem der Ansprüche 1 bis 12.

14. Verfahren zum Abscheiden eines Teils eines Produktstroms mittels einer Vorrichtung gemäß Anspruch 1, aufweisend die Schritte:
Abtrennen eines Produktstroms mit dem Trennmittel (2);
Transportieren des abgetrennten Produktstroms mittels der Abscheiderinne (11);
Überführen des abgetrennten Produktstroms von der Abscheiderinne (11) in den Sammelring (10);
Transportieren des Produktstroms, welcher dem Sammelring (10) mittels der Abscheiderinne (11) zugeführt wurde.

## Claims

1. Separation device (1) with
a separation means (2), for separating a part of a product stream,
at least one separation groove (11) for the transport of the separated product stream, and
a reservoir (10),
wherein the separation groove (11) is arranged in a way, that the separated product stream is transferrable into the reservoir (10),
wherein the reservoir (10) is formed to transport the product stream which is supplied from the separation groove (11) into the reservoir (10),
**characterized in that**
the reservoir (10) is a rotatable collection ring.

2. Separation device (1) according to claim 1, **characterized in that** the separation groove (11) and/or the reservoir (10) comprise(s) a predetermined bottom geometry.

3. Separation device (1) according to one of the previous claims, **characterized in that** the separation device (1) comprises at least one drive unit (20) for driving the reservoir (10).

4. Separation device (1) according to claim 3, **characterized in that** the drive unit (20) is a capsuled, preferably a dust-proof capsuled, drive motor.

5. Separation device (1) according to one of the previous claims, **characterized in that** the separation device (1) comprises at least one guiding means (21).

6. Separation device (1) according to claim 5, **characterized in that** the guiding means (21) comprises rollers for axially and/or radially guiding the reservoir (10).

7. Separation device (1) according to one of claims 5 or 6, **characterized in that** the guiding means (21) comprises at least one drivable roller.

8. Separation device (1) according to one of the previous claims, **characterized in that** that a holder (13) is provided, which comprises at least one universal joint (31, 32) for fixing the separation device (1).

9. Separation device (1) according to one of the previous claims, **characterized in that** the separation device (1) comprises a determination means for determining of parameters of the separated product stream.

10. Separation device (1) according to one of the previous claims, **characterized in that** the separation device (1) further comprises a control means for regulating and/or controlling a movement, especially a rotation movement, of the reservoir (10), dependent on predetermined parameters and/or or parameters determined with the determination means.

11. Separation device (1) according to one of the previous claims, **characterized in that** the separation device (1) further comprises a suction device (15), wherein the suction device (15) comprises a suction opening, which is formed in a way that at least one part of the product stream, separated and collected in the reservoir, can be sucked off the reservoir.

12. Separation device (1) according to one of the previous claims, wherein the separation device (1) comprises a multiplicity of separation devices (10), which are arranged in a transport direction of the separate product streams in series, preferably below each other, and wherein at least one of the reservoirs comprises a selection means for selecting one part of the separated product stream, which is formed in a way that the selected part or the non-selected part is transferrable into a further reservoir.

13. Weighing device, in particular combination weighing device, with a separation means (1) according to one of the claims 1 to 12.

14. Method for separating one part of a product stream using a device according to claim 1, comprising the steps:
separating a product stream with the separation means (2) ;
transporting the separated product stream with the separation groove (11);
transferring the separated product stream from the separation groove (11) into the reservoir (10);
transporting the product stream supplied from the separation groove (11) into the reservoir (10).

## Revendications

1. Dispositif de séparation (1) comprenant
un moyen de séparation (2) pour la séparation d'une partie d'un courant de produit,
au moins une rigole de séparation (11) pour le transport du courant de produit séparé, et
un dispositif de collecte (10),
dans lequel la rigole de séparation (11) est agencée de telle manière que le courant de produit séparé puisse être transféré dans le dispositif de collecte (10),
dans lequel le dispositif de collecte (10) est réalisé afin de transporter le courant de produit amené de la rigole de séparation (11) au dispositif de collecte (10),
**caractérisé en ce que**
le dispositif de collecte (10) est un anneau de collecte rotatif.

2. Dispositif de séparation (1) selon la revendication 1, **caractérisé en ce que** la rigole de séparation (11) et/ou le dispositif de collecte (10) présente une géométrie de fond prédéterminée.

3. Dispositif de séparation (1) selon l'une quelconque des revendications précédentes, **caractérisé en ce que** le dispositif de séparation (1) présente au moins un entraînement (20) pour l'entraînement du dispositif de collecte (10).

4. Dispositif de séparation (1) selon la revendication 3, **caractérisé en ce que** l'entraînement (20) est un moteur d'entraînement blindé, de préférence blindé de manière étanche à la poussière.

5. Dispositif de séparation (1) selon l'une quelconque des revendications précédentes, **caractérisé en ce que** le dispositif de séparation (1) présente au moins un moyen de guidage (21).

6. Dispositif de séparation (1) selon la revendication 5, **caractérisé en ce que** le moyen de guidage (21) présente des rouleaux pour le guidage axial et/ou radial du dispositif de collecte (10).

7. Dispositif de séparation (1) selon l'une quelconque des revendications précédentes 5 ou 6, **caractérisé en ce que** le moyen de guidage (21) présente au moins un rouleau entraînable.

8. Dispositif de séparation (1) selon l'une quelconque des revendications précédentes, **caractérisé en ce qu'**un support (13) est prévu, lequel présente au moins une articulation en croix (31, 32) pour la fixation du dispositif de séparation (1).

9. Dispositif de séparation (1) selon l'une quelconque des revendications précédentes, **caractérisé en ce que** le dispositif de séparation (1) présente un moyen de détection pour la détection de paramètres du courant de produit séparé.

10. Dispositif de séparation (1) selon l'une quelconque des revendications précédentes, **caractérisé en ce que** le dispositif de séparation (1) présente en outre une unité de commande pour la commande et/ou la régulation d'un mouvement, en particulier d'un mouvement de rotation du dispositif de collecte (10) en fonction de paramètres prédéterminés et/ou de paramètres qui ont été détectés avec le moyen de détection.

11. Dispositif de séparation (1) selon l'une quelconque des revendications précédentes, **caractérisé en ce que** le dispositif de séparation (1) présente en outre un dispositif d'aspiration (15), dans lequel le dispositif d'aspiration (15) présente une ouverture d'aspiration qui est réalisée de telle manière qu'au moins une partie du courant de produit séparé collecté dans le dispositif de collecte puisse être aspirée du dispositif de collecte.

12. Dispositif de séparation (1) selon l'une quelconque des revendications précédentes, dans lequel le dispositif de séparation (1) présente une pluralité de dispositifs de collecte (10) qui sont agencés dans un sens de transport du courant de produit séparé les uns derrière les autres, de préférence les uns sous les autres, et dans lequel au moins un des dispositifs de collecte présente un moyen de sélection pour la sélection d'une partie du courant de produit séparé qui est réalisé de sorte que la partie sélectionnée ou la partie non sélectionnée ne puisse être transférée dans un autre dispositif de collecte.

13. Balance, en particulier balance de combinaison avec un dispositif de séparation (1) selon l'une quelconque des revendications 1 à 12.

14. Procédé de séparation d'une partie d'un courant de produit à l'aide d'un dispositif selon la revendication 1, présentant les étapes de :
séparation d'un courant de produit avec le moyen de séparation (2) ;
transport du courant de produit séparé à l'aide de la rigole de séparation (11) ;
transfert du courant de produit séparé de la rigole de séparation (11) à l'anneau de collecte (10) ;
transport du courant de produit qui a été amené à l'anneau de collecte (10) à l'aide de la rigole de séparation (11).
